# FASCICULE DE BREVET EUROPEEN

(11) **EP 3 210 829 B1**
(45) Date de publication et mention de la délivrance du brevet: **19.07.2023**
(21) Numéro de dépôt: 17157488.2
(22) Date de dépôt: 22.02.2017
(51) Int. Cl.: B60Q 3/74, B60Q 3/64, B60Q 3/80, F21Y 105/10, F21V 5/04

(54) **SYSTÈME D'ÉCLAIRAGE POUR HABITACLE DE VÉHICULE AUTOMOBILE**
BELEUCHTUNGSSYSTEM FÜR DEN INNENRAUM VON EINEM KRAFTFAHRZEUG
LIGHTING SYSTEM FOR MOTOR VEHICLE PASSENGER COMPARTMENT

(30) Priorité: 24.02.2016 FR 1651520
(43) Date de publication de la demande: 30.08.2017
(73) Titulaire: Valeo Vision, 93012 Bobigny Cedex (FR)
(72) Inventeur: LECORRE, Jérôme, 75015 PARIS (FR); TASSY, Pierre-Louis, 92600 ASNIERES SUR SEINE (FR); GAYE, Birane, 77420 CHAMPS SUR MARNE (FR); FLEURENCE, Thierry, 57685 AUGNY (FR); KONIEC, Aymeric, 94350 Villiers Sur Marne (FR)
(74) Mandataire: Valeo Visibility

(56) Documents cités:
- EP-A2- 2 306 074
- WO-A1-2012/025363
- DE-A1- 10 137 336
- DE-A1-102006 058 637
- DE-B3-102013 200 442
- FR-A1- 2 995 976
- US-A1- 2003 174 499
- US-A1- 2008 080 201

## Description

La présente invention est relative notamment à un système d'éclairage.

Les documents US 2003 174499 A1, EP 2306074 A2 et DE 10 2006 058637 A1 décrivent des dispositifs d'éclairage connus de l'art antérieurs.

Une application préférée concerne l'industrie automobile, pour l'équipement de véhicules, en particulier pour la réalisation de dispositifs susceptibles de pouvoir émettre des faisceaux lumineux, encore appelés fonctions d'éclairage, à l'intérieur de l'habitacle du véhicule. Le terme éclairage s'entend comme incluant la signalisation d'une partie de l'habitacle et les effets décoratifs lumineux éventuels.

De manière conventionnelle, l'habitacle d'un véhicule est pourvu d'une pluralité de dispositifs d'éclairage. Par exemple, sont souvent présents un plafonnier et des liseuses. Typiquement, dans le cas du plafonnier, il est généralement possible d'activer un système d'éclairage illuminant vers le côté conducteur et, séparément, un système lumineux éclairant vers le côté passager. Autant de systèmes que de types d'éclairage souhaités sont nécessaires. Les fonctionnalités de ces systèmes éclairant sont donc limitées.

L'invention cherche à améliorer la définition des faisceaux d'éclairage intérieurs dans l'habitacle de véhicules automobiles.

La présente invention concerne un système d'éclairage pour habitacle de véhicule automobile tel que défini dans la revendication 1.

Il comprend un dispositif de formation de faisceau lumineux et un élément optique de projection configuré pour transformer le faisceau lumineux en faisceau de sortie. Le dispositif de formation de faisceau lumineux est configuré pour émettre un faisceau lumineux pixélisé formé d'une pluralité de sous-faisceaux

Ce type de système d'éclairage permet de multiplier les configurations d'éclairage à produire car la forme du faisceau est pixélisée de sorte que le faisceau peut facilement, par pilotage, être modifié. Ces modifications ne nécessitent pas de modification de l'élément optique de projection. Par exemple, un seul système de l'invention peut servir en plafonnier à une fonction d'éclairage vers le conducteur, une fonction d'éclairage vers le passager avant, une fonction d'éclairage des passagers arrière et une fonction d'éclairage global. De manière avantageuse, seul le pilotage des pixels du faisceau est modifié entre ces différentes fonctions. Ce principe peut être aussi bien appliqué au niveau d'une poignée de confort située à proximité de la bordure supérieure d'une vitre, au niveau des pieds à la base des sièges ou au niveau des montants du toit.

Ainsi, alors qu'on aurait pu a priori penser que l'emploi de faisceaux pixélisés est complexe et inadapté à des éclairages d'habitacles, l'invention permet de rationaliser les installations de l'habitacle en limitant les éléments éclairant tout en démultipliant leurs fonctions.

Avantageusement, le système est configuré pour que le faisceau lumineux soit choisi parmi plusieurs configurations de faisceaux correspondant chacun à une combinaison différente d'activation des sous-faisceaux. L'activation des sous-faisceaux peut être un allumage ou une extinction mais aussi une variation d'intensité lumineuse ou d'autres paramètres lumineux. Chaque combinaison de sous-faisceaux peut correspondre à une fonction d'éclairage souhaitée.

Suivant une possibilité, le dispositif de formation de faisceau lumineux comprend une pluralité de sources lumineuses chacune apte à émettre un sous-faisceau apte à participer au faisceau lumineux pixélisé.

Ainsi, chaque sous-faisceau peut correspondre à une source qui est commandable en allumage et/ou en intensité. Par exemple, au moins une des sources lumineuses comprend au moins deux émetteurs lumineux élémentaires, de sorte que l'on peut commander les émetteurs individuellement pour modifier le sous-faisceau correspondant.

Suivant une possibilité, deux au moins des au moins deux émetteurs lumineux sont configurés pour émettre des faisceaux de couleurs différentes. Leurs participations au sous-faisceau de la source considérée peuvent ainsi être complémentaires et cela peut permettre des variations, de couleurs par exemple en pilotant différemment chaque émetteur ou certains d'entre eux. Optionnellement, la au moins une des sources lumineuses qui comprend au moins deux émetteurs lumineux élémentaires est une diode électroluminescente à au moins deux puces, par exemple à au moins dix puces. Par puce, « chip » en anglais, d'une diode électroluminescente il faut comprendre un composant semi-conducteur apte à émettre des photons lorsqu'il est excité électriquement. Elle constitue également l'émetteur lumineux, soit seule, soit en association avec un luminophore qui convertit la longueur d'onde de la lumière émise par la puce. Il s'agit par exemple de matrices de 2*30 puces, ou plus généralement, de matrices composées de lignes et de colonnes, chaque ligne comportant aux moins 5 émetteurs lumineux élémentaires (i.e. plus petite unité lumineuse activable sélectivement), de préférence au moins 10 émetteurs lumineux élémentaires.

Autrement dit, le système peut comporter des sources lumineuses comportant chacune deux émetteurs lumineux, en particulier deux émetteurs lumineux émettant des couleurs différentes, lesdites sources lumineuses étant disposées en matrice de lignes et de colonnes sur un support, par exemple une matrice de 5 lignes et 6 colonnes de diodes électroluminescentes à deux puces, dites LED bipuce. Alternativement le système peut comporter une source lumineuse unique comportant de nombreux émetteurs lumineux agencés, avantageusement par paire émettant des couleurs différentes, en lignes et en colonnes à l'intérieur d'un même boîtier de source lumineuse.

La présente invention concerne également un véhicule équipé d'au moins un système d'éclairage selon la présente invention.

Il peut comprendre un tel système d'éclairage au niveau d'une poignée de confort en bordure du plafond de l'habitacle (par exemple à proximité d'une portière) et/ou un système d'éclairage en plafonnier de l'habitacle.

L'invention peut être utilisée dans un procédé d'éclairage de l'habitacle d'un véhicule.

Un tel procédé permet d'adapter l'éclairage en fonction des besoins, sur la base d'un même système, notamment avec une seule partie optique. Une électronique de pilotage permet de préférence d'utiliser pleinement l'ensemble des degrés de liberté autorisés par la présente invention.

D'autres caractéristiques et avantages de la présente invention seront mieux compris à l'aide de la description et des dessins qui montre des cas indicatifs de réalisation de l'invention et comprenant:
- la figure 1 représente une vue de principe d'un mode de réalisation de l'invention ;
- la figure 2 montre une possibilité d'implantation d'un système de l'invention dans l'habitacle d'un véhicule automobile ;
- la figure 3 illustre l'implantation de la figure 2 en vue de profil ;
- la figure 4 présente une vue en éclaté d'une possibilité d'intégration de l'invention dans un boitier rapportable dans un habitacle,
- la figure 5 représente une vue de principe d'un mode alternatif de réalisation de l'invention ;

Dans la description qui suit, des numéros de référence similaires seront utilisés pour décrire des concepts similaires à travers des modes de réalisation différents de l'invention.

Sauf indication spécifique du contraire, des caractéristiques techniques décrites en détail pour un mode de réalisation donné peuvent être combinées aux caractéristiques techniques décrites dans le contexte d'autres modes de réalisation décrits à titre exemplaire et non limitatif.

Le terme faisceau pixélisé ou ses équivalents a pour définition pour un dispositif émetteur d'un faisceau lumineux, que ledit faisceau lumineux est formé d'une pluralité de sous-faisceaux lumineux, chaque sous-faisceau lumineux pouvant être piloté indépendamment des autres sous-faisceaux lumineux. Chaque sous-faisceau pilotable indépendamment forme un rayon pixélisé.

Avant d'entrer dans le détail de modes de réalisation de l'invention, notamment avec l'appui des dessins, des options potentielles que l'invention peut présenter, seules ou selon toutes combinaisons, sont introduites brièvement ci-après :
- le dispositif de formation de faisceau lumineux comprend une pluralité de sources lumineuses chacune apte à émettre un sous-faisceau apte à participer au faisceau lumineux pixélisé ;
- au moins une des sources lumineuses comprend au moins deux émetteurs lumineux élémentaires ;
- deux au moins des au moins deux émetteurs lumineux sont configurés pour émettre dans des couleurs différentes ;
- la au moins une des sources lumineuses qui comprend au moins deux émetteurs lumineux élémentaires est une diode électroluminescente à au moins deux puces ;
- le dispositif de formation de faisceau lumineux comprend, associé chaque source lumineuse, un guide d'ondes, chaque guide d'ondes comprenant un dioptre d'entrée de lumière émise par la source lumineuse associé et un dioptre de sortie de lumière transmise vers l'élément optique de projection ;
- les guides d'ondes présentent une section polygonale de dimension croissante depuis le dioptre d'entrée vers le dioptre de sortie ;
- l'élément optique de projection comporte une lentille dont le dioptre d'entrée est configuré pour recevoir au moins une partie de la lumière transmise par le dioptre de sortie des guides d'ondes ;
- le dioptre de sortie des guides d'ondes est au contact du dioptre d'entrée de la lentille ;
- l'élément optique de projection comporte une lentille additionnelle sur le trajet de la lumière issue de la lentille ;
- la lentille additionnelle est convergente ;
- l'élément optique de projection comprend un réflecteur de sortie du faisceau de sortie ;
- le réflecteur est plan ;.
- le réflecteur est convergent ;
- le système comprend des moyens de pilotage individuel des sous-faisceaux.

Nous allons maintenant présenter la présente invention selon un mode de réalisation particulier illustré à titre d'exemple non limitatif par les figures suivantes.

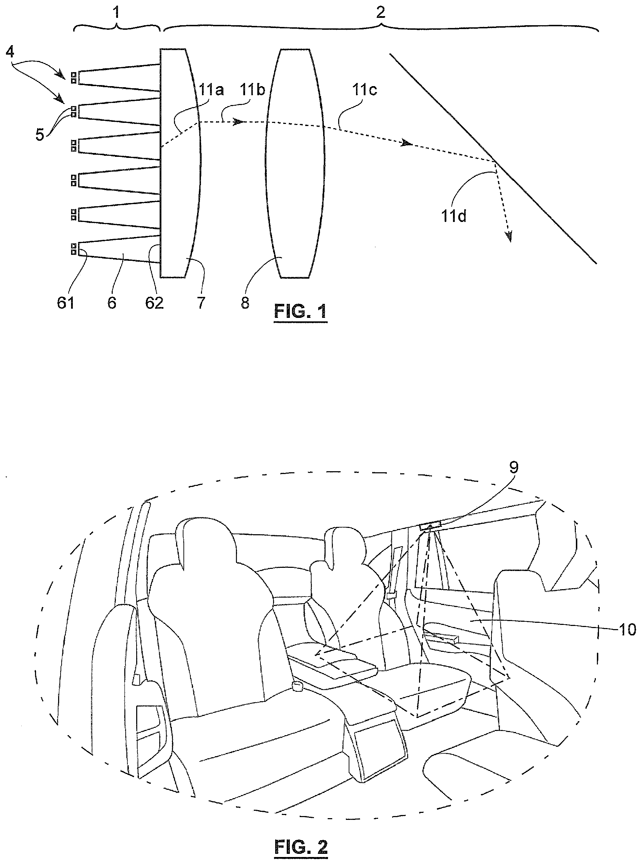

La figure 1 présente un exemple de réalisation du système de l'invention de façon schématique. Le système y comprend, depuis une zone amont vers une zone aval suivant le trajet de rayons lumineux produits par le système, un dispositif de formation de faisceau lumineux 1 et un élément optique de projection 2. En lui-même, le dispositif de formation de faisceau lumineux comprend de préférence une partie de génération de rayons lumineux et une partie optique permettant de délivrer des rayons pixélisés adaptés à l'élément optique de projection 2. La partie de génération de rayons lumineux comprend une pluralité de sources lumineuses 4.

D'une manière générale, la présente invention peut utiliser des sources lumineuses du type diodes électroluminescentes encore communément appelées LEDs. Notamment, ces LEDs peuvent être dotées d'au moins une puce apte à émettre une lumière d'intensité avantageusement ajustable selon la fonction d'éclairage à réaliser. Les puces peuvent être juxtaposées perpendiculairement à la direction moyenne d'émission de la LED. Il peut y avoir plusieurs sources comme cela sera exposé plus en détail ci-après. Par ailleurs, le terme source lumineuse s'entend ici d'un ensemble, d'au moins un émetteur élémentaire telle une LED, apte à produire un flux conduisant à générer en sortie du système de l'invention au moins un sous-faisceau lumineux de sortie participant à au moins une fonction souhaitée. D'autres types de sources sont aussi envisageables dans l'invention. Les OLEDs (diodes électroluminescentes organiques sont aussi comprises dans le terme LED.

Dans le cas de la figure 1, chaque source 4 comprend deux émetteurs élémentaires 5 (ou puces) de sorte à permettre une grande flexibilité de génération de lumière. En effet, de manière avantageuse, tout ou partie des sources peuvent fournir un sous-faisceau individuel contrôlable (donc un pixel du faisceau global) avec des paramètres lumineux variables, tels que l'intensité de chaque émetteur 5 ou encore la couleur de la source 4 par contrôle individuel des émetteurs 5. Ceux-ci émettent de préférence dans des couleurs différentes. De façon à permettre une variation progressive entre deux couleurs, les sources 4 en face d'un guide de lumière sont par exemple de couleurs différentes, par exemple blanc et ambre.

Le contrôle de chaque source 4 et de chaque émetteur s'entend donc non seulement d'un allumage ou d'une extinction, mais aussi d'une variation d'un paramètre de la lumière émise.

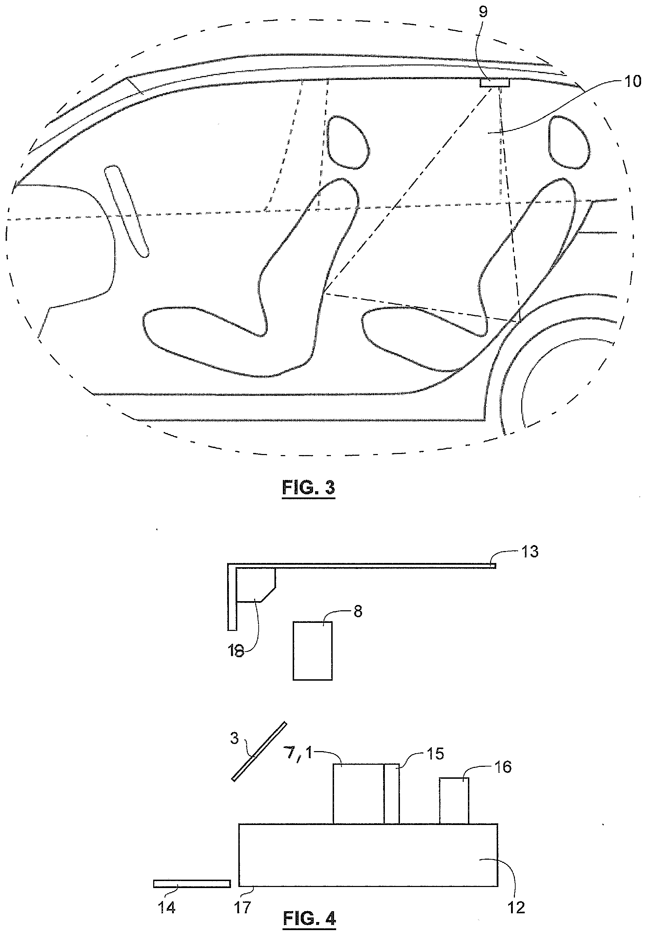

L'illustration fournie en figure 1 montre que les sources sont de préférence situées dans un plan, vertical dans la figure 1. Les sources 4 peuvent être organisées en réseau dans un tel plan. Les sources 4 sont par exemple alignées suivant une direction principale, ou être organisées en deux directions, par exemple avec un réseau en lignes et colonnes. Toute autre configuration d'implantation des sources 4 est possible. Elles sont de préférence espacées de manière régulière, avec un même écartement, dans un plan d'implantation. Typiquement, ce plan est la surface d'une carte de support de LEDs telle que par exemple connue sous l'acronyme PCB (Printed Circuit Board pour Carte à circuits imprimés). Une telle carte est visible au repère 15 en figure 4. Elle peut servir au moins en partie à contrôler les sources 4 en les alimentant de manière sélective. Sur cette carte 15 ou de manière séparée, un pilotage des sources peut être implémenté, par exemple avec un processeur et des moyens de programmation d'une ou plusieurs fonctions d'éclairage différentes. Cette possibilité est montrée dans l'exemple de la figure 4 avec une carte de pilotage 16. Suivant une possibilité, la carte de pilotage 16 reçoit une instruction d'activation d'une fonction d'éclairage depuis tous moyens (un bouton de pression, une commande issue du tableau de bord, d'un signal généré par une interface d'ordinateur de bord, d'un capteur, par exemple d'ouverture de portière...). La carte 16 traite cette instruction en identifiant la configuration de contrôle des sources correspondantes, et en transmettant à la carte 15 des indications de configurations d'alimentation électrique des sources, notamment en appliquant à chaque émetteur 5 de chaque source 4 une consigne d'alimentation.

Il est avantageux de traiter optiquement les rayons émis par les sources 4. A cet effet, le dispositif 1 peut comporter une partie optique de préférence dotée d'une pluralité de guides d'ondes 6, avantageusement un guide d'ondes 6 par source 4. Dans le cas de la figure 1, les guides d'ondes 6 sont une enveloppe périphérique s'évasant depuis une extrémité proximale du guide vers une extrémité distale du guide. Il peut s'agir d'une enveloppe conique ou autre. Le guide peut être en polycarbonate ou en polyméthacrylate de méthyle (PMMA) ou en silicone, par exemple. La section transversale du guide est de préférence polygonale, mais peut aussi être circulaire. A l'extrémité proximale se situe un dioptre d'entrée 61 par lequel les rayons émis par la source 4 entrent dans le guide. Il peut s'agir d'une face du guide transversale à son enveloppe. De préférence, le guide 6 est configuré pour propager les rayons en son sein, par réflexion interne, jusqu'à un dioptre de sortie 62, au niveau de l'extrémité distale du guide. Ce dioptre peut être une face du guide transversale à son enveloppe.

L'élément optique de projection recevant les rayons sortant du dispositif peut avoir une configuration variable selon l'application. Il peut comporter une fonction de déviation des rayons et/ou une fonction de focalisation ou de divergence et/ou de diffusion et/ou de diffraction et/ou de filtration (par exemple par une surface teintée...)

L'élément optique de projection 2 peut présenter plusieurs composants chacun apte à réaliser une ou plusieurs fonctions optiques. Dans un cas non illustré, l'élément optique de projection 2 peut comprendre un capot au moins en partie transparent ou translucide, éventuellement optiquement neutre.

Il peut aussi, comme en figure 1, présenter en outre une lentille 7 (au moins). Cette lentille 7 est de préférence commune à tous les dioptres 62 de sortie des guides de sorte à réunir les rayons produits par toutes les sources actives. Dans les cas de la figure 1, le dioptre d'entrée de la lentille est au contact des dioptres de sorties 62, de sorte à produire un dispositif 1 compact. La lentille 7 peut être monobloc, c'est-à-dire produite d'un seul tenant, avec les guides 6. Dans la figure 1, les rayons sortent du dispositif 1 par le dioptre de sortie de la lentille 7. Celle-ci est de préférence convergente et peut par exemple avoir une configuration plan convexe. Son dioptre plan peut permettre une bonne coopération avec les dioptres de sortie 62 des guides, qui peuvent être plans également. On a schématisé le trajet d'un rayon dans la lentille 7 avec le repère 11 a et à sa sortie avec le repère 11b.

Suivant une option, l'axe optique du dispositif 1 n'est pas celui souhaité pour la sortie des rayons hors du système complet. A cet effet, l'élément optique de projection 2 peut assurer une déviation, comme c'est le cas dans la figure 1. En effet, on peut par exemple réaliser un système à la forme extérieure globale relativement allongée suivant la direction de l'axe optique du dispositif 1, placer le système parallèlement à une paroi de l'habitacle et renvoyer les rayons dans une direction de sortie voulue. Ainsi, la figure 1 montre un réflecteur 3 servant à dévier les rayons avant leur sortie. La direction du rayon 11d est ainsi déviée relativement au rayon 11c reçu par le réflecteur 3. Ce dernier peut notamment être un miroir plan, ou encore concave ou convexe. La déviation peut être non limitativement de 90° +/- 30°.

Suivant l'exemple de la figure 1, l'élément optique de projection comprend aussi une lentille additionnelle 8, servant de préférence à concentrer le faisceau. Elle est par exemple biconvexe.

Dans la figure 1, elle est intercalée entre la lentille 7 et le réflecteur 3 et orientée selon l'axe optique de la lentille 7.

Le système proposé peut être compact et facile à implanter. Les figures 2 et 3 l'illustrent avec un système fixé dans l'habitacle de sorte à équiper le pourtour supérieur d'une portière, par exemple au niveau d'une poignée de confort 9. Le système de l'invention peut être intégré dans cette poignée ou sur celle-ci. Un exemple de zone éclairable 10 est schématisée ; grâce à l'invention, on peut par exemple diviser cette zone en 3 sections correspondant chacune à une fonction d'éclairage prédéfinie, impliquant chacune une activation différente des sources 4, et par conséquent, des sous-faisceaux différents pour composer le faisceau d'éclairage de la fonction. On notera que le volume éclairé n'est pas forcément continu, il peut comporter plusieurs portions distinctes de l'espace. Il n'est pas exclu qu'une fonction d'éclairage soit configurée pour générer un faisceau variable au cours du temps, et par exemple périodique (l'intensité et/ou la zone éclairée variant de manière cyclique) et/ou avec une phase de montée en intensité lumineuse et/ou de descente en intensité.

Un cas concret est présenté en figure 4. Un boitier 12 y renferme les composants précédemment décrits, à savoir le dispositif 1, l'élément optique de projection ici avec les lentilles 7,8 et le réflecteur 3, ainsi qu'une carte de support 15 des sources, notamment sous forme de LEDs, et une carte de pilotage 16. Des glissières peuvent recevoir ces composants de manière successive suivant une direction longitudinale du système correspondant à l'axe optique du dispositif 1. La sortie des rayons est assurée dans cet exemple par une zone 17, à 90° relativement à l'axe longitudinal du système. La zone 17 est par exemple une fenêtre dans le boîtier 12. Cette fenêtre peut elle-même être équipée d'une vitre 14 de protection. Enfin, un capot 13 peut clore le boîtier 12 une fois les composants montés. Les glissières bloquent en translation les composants suivant la direction longitudinale et le capot 13, en coopération avec le fond opposé, du boîtier, bloque les mouvements transversaux résiduels. La périphérie du réflecteur 3 peut être montée sur un cadre. Une nervure 18 de contre-appui fait de préférence saillie sur la face interne du capot pour bloquer le réflecteur 3 par sa face arrière.

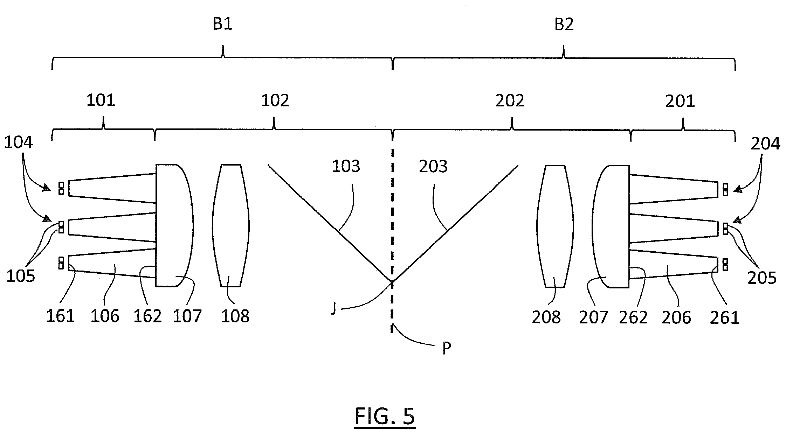

La figure 5 présente un exemple alternatif de réalisation du système de l'invention de façon schématique. Dans ce mode de réalisation le système comprend deux branches B1, B2.

Chaque branche est composée des éléments tels que décrits précédemment dans le cadre de la figure 1. La référence des éléments identiques est augmentée de 100 pour les éléments de la branche B1 et de 200 pour ceux de la branche B2.

Les branches B1 et B2 sont disposées de part et d'autre d'un plan médian P représenté en trait pointillé.

Avantageusement les branches B1 et B2 sont symétriques l'une de l'autre par rapport au plan médian P.

Dans la variante représentée sur le Figure 5 les réflecteurs 103 et 203 sont jointifs. Ils forment ainsi un assemblage qui présente un profil en forme de V. L'arête J de jonction des deux réflecteurs se situe dans le plan P. Alternativement, si les branches sont dissymétriques l'une par rapport à l'autre, ou si les réflecteurs 103, 203 sont courbés, l'arrête de jonction des réflecteur peut se situer en dehors du plan P.

Alternativement les réflecteurs 103 et 203 sont deux pièces séparées.

Avantageusement les éléments composant les branches B1 et B2 présentent des axes de symétrie de sorte qu'ils puissent être utilisés indifféremment dans les deux branches B1 ou B2 par simple rotation. Ainsi on peut réaliser l'ensemble du système de manière économique avec un nombre réduits de types d'éléments à fabriquer.

Alternativement les éléments diffèrent d'une branche à l'autre. Par exemple le nombre de sources de lumière 104, et de guide d'ondes associés, peut différer du nombre de sources de lumière 204, et de guide d'ondes associés. De même la nature et la formes des pièces optiques composant l'élément optique de projection 102, 202 peut varier d'une branche à l'autre.

Cet exemple alternatif de réalisation peut être intégré dans un boitier rapportable dans un habitacle, tel que représenté en Figure 4. Les réflecteurs 103 et 203 sont alors positionnés en regard de la fenêtre 17 partagée par les deux branches B1 et B2. Alternativement le boîtier 12 peut comprendre deux fenêtres, une pour chaque branche B1, B2.

Un tel mode de réalisation présente l'avantage de réduire, par rapport au mode de réalisation décrit en figure 1, l'encombrement du système dans une direction parallèle au plan des sources lumineuses. Cela permet de faciliter l'intégration d'un tel system dans l'habitacle du véhicule, en particulier dans une zone où seule une faible hauteur et/ou profondeur est disponible.

Un autre avantage, en répartissant ainsi les sources lumineuses sur plusieurs supports distants les uns des autres, est de limiter l'échauffement thermique desdites sources lumineuses.

Un autre avantage est de faciliter le pilotage des sources lumineuses. En effet il est plus facile de réaliser un circuit électronique pilotant un nombre réduit de sources lumineuses qu'un circuit électronique pilotant un nombre élevé de sources lumineuses. Ainsi en répartissant les sources lumineuses sur plusieurs supports, on réduit leur nombre à piloter pour un circuit électronique donné par rapport au mode de réalisation décrit en figure 1. Le pilotage électronique global du système s'en trouve simplifié.

L'invention n'est pas limitée aux modes de réalisation décrits.

## Revendications

1. Système d'éclairage pour habitacle de véhicule automobile comprenant un dispositif de formation de faisceau lumineux (1) et un élément optique de projection (2) configuré pour transformer le faisceau lumineux en faisceau de sortie, le dispositif de formation de faisceau lumineux (1) étant configuré pour émettre un faisceau lumineux pixélisé formé d'une pluralité de sous-faisceaux,
dans lequel le dispositif de formation de faisceau lumineux (1) comprend une pluralité de sources lumineuses (4) chacune apte à émettre un sous-faisceau apte à participer au faisceau lumineux pixélisé,
dans lequel le dispositif de formation de faisceau lumineux (1) est **caractérisé en ce qu'**il comprend, associé à chaque source lumineuse (4), un guide d'ondes, chaque guide d'ondes (6) comprenant un dioptre d'entrée (61) de lumière émise par la source lumineuse (4) associé et transmettant ladite lumière vers l'élément optique de projection (2),
dans lequel l'élément optique de projection (2) comprend un réflecteur de sortie (3) du faisceau de sortie,
dans lequel le réflecteur est convergent, et/ou l'élément optique de projection (2) comporte une lentille (7) configurée pour recevoir au moins une partie de la lumière transmise par les guides d'ondes (6),
dans lequel, de préférence, les guides d'ondes (6) possèdent chacun un dioptre de sortie (62) et la lentille comprend un dioptre d'entrée recevant au moins une partie de la lumière transmisse par les dioptres de sortie (62).

2. Système selon la revendication précédente, dans lequel au moins une des sources lumineuses (4) comprend au moins deux émetteurs lumineux (5) élémentaires.

3. Système selon la revendication précédente, dans lequel au moins un émetteur lumineux est une émetteur de lumière à semi-conducteurs.

4. Système selon la revendication précédente, dans lequel deux au moins des au moins deux émetteurs lumineux (5) sont configurés pour émettre des faisceaux lumineux de couleurs différentes.

5. Système selon l'une quelconque des revendications 2 à 4, dans lequel la au moins une des sources lumineuses (4) qui comprend au moins deux émetteurs lumineux (5) élémentaires est une diode électroluminescente à au moins deux puces, par exemple au moins dix puces.

6. Système selon l'une des revendications précédentes, dans lequel les guides d'ondes (6) présentent une section polygonale de dimension croissante depuis le dioptre d'entrée (61) vers le dioptre de sortie (62).

7. Système selon l'une des revendications précédentes, dans lequel le dioptre de sortie (62) des guides d'ondes (6) est au contact du dioptre d'entrée de la lentille (7).

8. Système selon la revendication précédente, dans lequel la lentille (7) est monobloc, c'est-à-dire produite d'un seul tenant, avec les guides d'ondes (6).

9. Système selon l'une des revendications précédentes, dans lequel l'élément optique de projection (2) comporte une lentille additionnelle (8) sur le trajet de la lumière issue de la lentille (7).

10. Système selon l'une des revendications précédentes, **caractérisé en ce qu'**il comporte deux branches B1, B2, chaque branche comprenant un dispositif de formation de faisceau lumineux (101, 201) et un élément optique de projection (102, 202) .

11. Véhicule équipé d'au moins un système d'éclairage selon l'une quelconque des revendications précédentes.

12. Véhicule selon la revendication précédente, comprenant un système d'éclairage au niveau d'une poignée de confort (9) en bordure du plafond de l'habitacle.

13. Véhicule selon l'une des deux revendications précédentes, comprenant un système d'éclairage en plafonnier de l'habitacle.

## Patentansprüche

1. Beleuchtungssystem für einen Innenraum eines Kraftfahrzeugs, das eine Vorrichtung zur Bildung eines Lichtstrahls (1) und ein optisches Projektionselement (2), das dazu konfiguriert ist, den Lichtstrahl in einen Ausgangsstrahl umzuwandeln, beinhaltet, wobei die Vorrichtung zur Bildung eines Lichtstrahls (1) dazu konfiguriert ist, einen verpixelten Lichtstrahl zu emittieren, der durch eine Vielzahl von Teilstrahlen gebildet wird,
wobei die Vorrichtung zur Bildung eines Lichtstrahls (1) eine Vielzahl von Lichtquellen (4) beinhaltet, die jeweils dazu fähig sind, einen Teilstrahl zu emittieren, der dazu fähig ist, an dem verpixelten Lichtstrahl mitzuwirken,
wobei die Vorrichtung zur Bildung eines Lichtstrahls (1) **dadurch gekennzeichnet ist, dass** sie einen mit jeder Lichtquelle (4) assoziierten Wellenleiter beinhaltet, wobei jeder Wellenleiter (6) ein assoziiertes Eingangsdiopter (61) für Licht, das durch die Lichtquelle (4) emittiert wird, beinhaltet und das Licht zu dem optischen Projektionselement (2) überträgt,
wobei das optische Projektionselement (2) einen Ausgangsreflektor (3) des Ausgangsstrahls beinhaltet, wobei der Reflektor konvergierend ist und/oder das optische Projektionselement (2) eine Linse (7) umfasst, die dazu konfiguriert ist, mindestens einen Teil des durch die Wellenleiter (6) übertragenen Lichts zu empfangen,
wobei die Wellenleiter (6) vorzugsweise jeweils ein Ausgangsdiopter (62) besitzen und die Linse ein Eingangsdiopter beinhaltet, das mindestens einen Teil des durch die Ausgangsdiopter (62) übertragenen Lichts empfängt.

2. System nach dem vorhergehenden Anspruch, wobei mindestens eine der Lichtquellen (4) mindestens zwei elementare Lichtemitter (5) beinhaltet.

3. System nach dem vorhergehenden Anspruch, wobei mindestens ein Lichtemitter ein Halbleiterlichtemitter ist.

4. System nach dem vorhergehenden Anspruch, wobei mindestens zwei der mindestens zwei Lichtemitter (5) dazu konfiguriert sind, Lichtstrahlen mit unterschiedlichen Farben zu emittieren.

5. System nach einem beliebigen der Ansprüche 2 bis 4, wobei die mindestens eine der Lichtquellen (4), die mindestens zwei elementare Lichtemitter (5) beinhaltet, eine Elektrolumineszenzdiode mit mindestens zwei Chips, beispielsweise mindestens zehn Chips, ist.

6. System nach einem der vorhergehenden Ansprüche, wobei die Wellenleiter (6) einen polygonalen Querschnitt aufweisen, der von dem Eingangsdiopter (61) zu dem Ausgangsdiopter (62) hin zunimmt.

7. System nach einem der vorhergehenden Ansprüche, wobei das Ausgangsdiopter (62) der Wellenleiter (6) mit dem Eingangsdiopter der Linse (7) in Kontakt ist.

8. System nach dem vorhergehenden Anspruch, wobei die Linse (7) mit den Wellenleitern (6) einteilig, das heißt aus einem Stück hergestellt, ist.

9. System nach einem der vorhergehenden Ansprüche, wobei das optische Projektionselement (2) auf dem Weg des aus der Linse (7) austretenden Lichts eine zusätzliche Linse (8) umfasst.

10. System nach einem der vorhergehenden Ansprüche, **dadurch gekennzeichnet, dass** es zwei Zweige B1, B2 umfasst, wobei jeder Zweig eine Vorrichtung zur Bildung eines Lichtstrahls (101, 201) und ein optisches Projektionselement (102, 202) beinhaltet.

11. Fahrzeug, das mit mindestens einem Beleuchtungssystem nach einem beliebigen der vorhergehenden Ansprüche ausgerüstet ist.

12. Fahrzeug nach dem vorhergehenden Anspruch, das ein Beleuchtungssystem im Bereich eines Komfortgriffs (9) am Rand des Dachhimmels des Innenraums beinhaltet.

13. Fahrzeug nach einem der zwei vorhergehenden Ansprüche, das ein Beleuchtungssystem in der Deckenleuchte des Innenraums beinhaltet.

## Claims

1. Lighting system for a motor vehicle passenger compartment comprising a light beam formation device (1) and an optical projection element (2) configured to convert the light beam into an output beam, the light beam formation device (1) being configured to emit a pixelated light beam formed of a plurality of sub-beams,
wherein the light beam formation device (1) comprises a plurality of light sources (4) each able to emit a sub-beam able to participate in the pixelated light beam,
wherein the light beam formation device (1) is **characterized in that** it comprises, associated with each light source (4), a waveguide, each waveguide (6) comprising an entrance dioptric interface (61) for light emitted by the associated light source (4) and transmitting said light towards the optical projection element (2),
wherein the optical projection element (2) comprises an output reflector (3) of the output beam,
wherein the reflector is convergent, and/or the optical projection element (2) has a lens (7) configured to receive at least a part of the light transmitted by the waveguides (6)
wherein, preferably, the waveguides (6) each have an exit dioptric interface (62) and the lens comprises an entrance dioptric interface receiving at least a part of the light transmitted by the exit dioptric interfaces (62) .

2. System according to the preceding claim, wherein at least one of the light sources (4) comprises at least two elementary light emitters (5).

3. System according to the preceding claim, wherein at least one light emitter is a semiconductor light emitter.

4. System according to the preceding claim, wherein at least two of the at least two light emitters (5) are configured to emit light beams of different colours.

5. System according to any one of Claims 2 to 4, wherein the at least one of the light sources (4) that comprises at least two elementary light emitters (5) is a light-emitting diode with at least two chips, for example at least ten chips.

6. System according to one of the preceding claims, wherein the waveguides (6) have a polygonal section of which the dimension increases from the entrance dioptric interface (61) towards the exit dioptric interface (62).

7. System according to one of the preceding claims, wherein the exit dioptric interface (62) of the waveguides (6) is in contact with the entrance dioptric interface of the lens (7).

8. System according to the preceding claim, wherein the lens (7) is integral, i.e. produced in one piece, with the waveguides (6).

9. System according to one of the preceding claims, wherein the optical projection element (2) has an additional lens (8) on the path of the light coming from the lens (7).

10. System according to one of the preceding claims, **characterized in that** it has two branches B1, B2, each branch comprising a light beam formation device (101, 201) and an optical projection element (102, 202).

11. Vehicle equipped with at least one lighting system according to any one of the preceding claims.

12. Vehicle according to the preceding claim, comprising a lighting system at a comfort handle (9) at the edge of the ceiling of the passenger compartment.

13. Vehicle according to either of the two preceding claims, comprising an overhead lighting system of the passenger compartment
